# EUROPÄISCHE PATENTSCHRIFT

(11) **EP 2 873 871 B1**
(45) Veröffentlichungstag und Bekanntmachung des Hinweises auf die Patenterteilung: **13.09.2017**
(21) Anmeldenummer: 13005358.0
(22) Anmeldetag: 14.11.2013
(51) Int. Cl.: F15B 15/06, F16C 35/06

(54) **FLUIDBETÄTIGTE DREHANTRIEBSVORRICHTUNG**
FLUID-ACTUATED ROTARY DRIVE
DISPOSITIF D'ACTIONNEMENT ROTATIF FLUIDIQUE

(43) Veröffentlichungstag der Anmeldung: 20.05.2015
(73) Patentinhaber: FESTO AG & Co. KG, 73734 Esslingen (DE)
(72) Erfinder: Yigit, Hava, 73061 Ebersbach (DE); Bitzer, Jörg, 73733 Esslingen (DE); Gückel, Jürgen, 70794 Filderstadt (DE); Diener, Ulrich, 73732 Esslingen (DE)
(74) Vertreter: Patentanwälte Magenbauer & Kollegen Partnerschaft mbB

(56) Entgegenhaltungen:
- DE-A1- 3 621 489
- FR-A- 1 128 710
- JP-A- H10 259 804
- JP-A- 2007 333 130

## Beschreibung

Die Erfindung betrifft eine fluidbetätigte Drehantriebsvorrichtung, mit einem Antriebsgehäuse, in dem mindestens eine durch gesteuerte Fluidbeaufschlagung linear verschiebbare Antriebseinheit angeordnet ist, die an einer Längsseite eine Antriebsverzahnung aufweist, wobei in dem Antriebsgehäuse eine sich in einer Gehäuse-Höhenrichtung erstreckende und zu einer Gehäuse-Oberseite hin ausmündende Gehäuseausnehmung ausgebildet ist, in die von der Gehäuse-Oberseite her und mit einer Unterseite voraus eine Abtriebsbaugruppe eingesteckt ist, die über einen um eine in der Gehäuse-Höhenrichtung orientierte Drehachse drehbaren Abtriebskörper und eine zur Drehlagerung des Abtriebskörpers bezüglich des Antriebsgehäuses dienende Wälzlagereinrichtung verfügt, wobei der Abtriebskörper einen im Innern des Antriebsgehäuses mit der Antriebsverzahnung der mindestens einen Antriebseinheit in Verzahnungseingriff stehenden Abtriebszahnkranz und im Bereich seiner Oberseite außerhalb des Antriebsgehäuses mindestens eine dem Kraftabgriff dienende Befestigungsschnittstelle aufweist, wobei die Wälzlagereinrichtung aus einem bezüglich des Antriebsgehäuses und des Abtriebskörpers gesonderten Wälzlager besteht, das zu einer selbst zusammenhaltenden Baueinheit zusammengefügte Wälzlagerkomponenten in Form eines Innenringes, eines den Innenring radial außen umschließenden Außenringes und zwischen dem Innenring und dem Außenring angeordneten Wälzkörpern umfasst, wobei das Wälzlager von der dem Antriebsgehäuse zugewandten Unterseite her koaxial auf den Abtriebskörper aufgesteckt ist und sich mit einer nach oben weisenden oberen Stirnfläche seines Innenringes an einer nach unten weisenden Abstützfläche des Abtriebskörpers abstützt und wobei sich der Außenring innerhalb der Gehäuseausnehmung mit einer dem Antriebsgehäuse zugewandten unteren Stirnfläche an einer nach oben weisenden Abstützfläche des Antriebsgehäuses abstützt, wobei der Innenring des Wälzlagers durch an dem Abtriebskörper fixierte erste Spannmittel mit der Abstützfläche des Abtriebskörpers axial verspannt ist und wobei der Außenring des Wälzlagers durch an dem Antriebsgehäuse fixierte zweite Spannmittel mit der Abstützfläche des Antriebsgehäuses axial verspannt ist, wobei die ersten Spannmittel einen an dem Abtriebskörper fixierten ersten Spannring aufweisen, der mittels von unten her in den Abtriebskörper eingeschraubter Befestigungsschrauben der ersten Spannmittelmit dem Abtriebskörper verspannt ist und der mit seiner oberen Stirnfläche an der unteren Stirnfläche des Innenringes anliegt, wobei der Innenring axial zwischen der nach unten weisenden Abstützfläche des Abtriebskörpers und dem ersten Spannring angeordnet ist, und wobei die zweiten Spannmittel einen an dem Antriebsgehäuse fixierten zweiten Spannring aufweisen, der mit seiner unteren Stirnfläche an der oberen Stirnfläche des Außenringes anliegt, wobei der Außenring axial zwischen der nach oben weisenden Abstützfläche des Antriebsgehäuses und dem zweiten Spannring angeordnet ist.

Eine fluidbetätigte Drehantriebsvorrichtung ist aus der EP 2 495 450 B1 bekannt. Diese bekannte Drehantriebsvorrichtung enthält ein Antriebsgehäuse, in dem zwei durch Fluidkraft gegenläufig bewegbare Antriebseinheiten angeordnet sind, die an den einander zugewandten Längsseiten jeweils eine Antriebsverzahnung aufweisen, die mit einer Abtriebsverzahnung eines bezüglich des Antriebsgehäuses drehbar gelagerten Abtriebskörpers in Eingriff steht. Eine Linearbewegung der Antriebseinheiten hat eine Drehbewegung des Abtriebskörpers um seine Längsachse zur Folge, die sich an mindestens einer außerhalb des Antriebsgehäuses an dem Abtriebskörper ausgebildeten Befestigungsschnittstelle abgreifen lässt, um beispielsweise eine Maschinenkomponente oder eine Greifvorrichtung rotativ zu bewegen. Für die Drehlagerung des Abtriebskörpers ist eine Wälzlagereinrichtung vorhanden, die mit dem Abtriebskörper zu einer selbsttragenden Abtriebsbaugruppe zusammengefasst ist, um die Montage am Antriebsgehäuse zu erleichtern. Die Wälzlagereinrichtung enthält konzentrisch zueinander angeordnete Wälzlagerflächen, zwischen denen abrollbare Wälzkörper angeordnet sind, wobei eine innere Wälzlagerfläche direkt am Außenumfang des Abtriebskörpers ausgebildet ist und eine äußere Wälzlagerfläche Bestandteil eines den Abtriebskörper konzentrisch umschließenden äußeren Lagerringes ist. Die Abtriebsbaugruppe ist mit dem Antriebsgehäuse verschraubt, indem von einer Unterseite her Befestigungsschrauben durch das Antriebsgehäuse hindurchgeführt sind, die in Gewindelöcher des äußeren Lagerringes von unten her eingeschraubt sind.

Der vorstehend erläuterte Stand der Technik hat den Vorteil, dass der Abtriebskörper und die Wälzlagereinrichtung in einer Abtriebsbaugruppe zusammengefasst und als Einheit von oben her an dem Antriebsgehäuse montiert werden können. Allerdings erkauft man dies mit dem Nachteil relativ hoher Herstellungskosten, weil eine spezielle Bearbeitung des Abtriebskörpers und des äußeren Lagerringes erforderlich ist. Einerseits muss am Außenumfang des Abtriebskörpers eine Wälzlagerfläche eingebracht werden, wozu eine Schleifbearbeitung des Abtriebskörpers erforderlich ist. Andererseits muss ein äußerer Lagerring zur Verfügung gestellt werden, der außer der äußeren Wälzlagerfläche auch noch Gewindebohrungen aufweist, um die Schraubbefestigung am Antriebsgehäuse zu ermöglichen.

Eine ähnliche Situation liegt bei der Drehantriebsvorrichtung gemäß EP 2 495 451 B1 vor, die sich von der eben erläuterten im Wesentlichen dadurch unterscheidet, dass zur Schraubbefestigung des äußeren Lagerringes unmittelbar in dem äußeren Lagerring ein Außengewinde ausgebildet ist.

Die EP 2 093 432 A1 offenbart eine fluidbetätigte Drehantriebsvorrichtung bei der wiederum unmittelbar ein über dem Kraftabgriff dienende Befestigungsstellen verfügender Abtriebskörper mit einer inneren Wälzlagerfläche einer Wälzlagereinrichtung ausgestattet ist und darüber hinaus mit axial durchgehenden Befestigungslöchern versehen ist. Ein äußerer Lagerring der Wälzlagereinrichtung ist mit dem Antriebsgehäuse verschraubt, wobei die Befestigungsschrauben von oben her durch den äußeren Lagerring hindurchgeführt sind.

Die JP 2007 333130 A offenbart eine Abtriebsbaugruppe und eine damit ausgestattete Drehantriebsvorrichtung der eingangs genannten Art, wobei ein Abtriebskörper mittels einer schematisch angedeuteten Wälzlagereinrichtung an einem Antriebsgehäuse drehbar gelagert ist. Hierbei ist ein radial außen angeordneter Bereich der Wälzlagereinrichtung mittels eines Spannringes mit dem Antriebsgehäuse verspannt und ein radial innen liegender Bereich der Wälzlageranordnung ist mittels eines weiterem Spannringes mit dem Abtriebskörper verspannt. Der Erfindung liegt die Aufgabe zugrunde, eine fluidbetätigte Drehantriebsvorrichtung zu schaffen, die bei einfacher Montagemöglichkeit kostengünstig herstellbar ist.

Zur Lösung dieser Aufgabe ist in Verbindung mit einer fluidbetätigten Drehantriebsvorrichtung der eingangs genannten Art vorgesehen, dass der zweite Spannring mittels von oben her in das Antriebsgehäuse eingeschraubter Befestigungsschrauben der zweiten Spannmittel am Antriebsgehäuse fixiert ist, dass sich zwischen dem ersten Spannring und dem Abtriebskörper ein axialer Abstand befindet, so dass eine axiale Vorspannung des Innenringes bezüglich des Abtriebskörpers vorliegt und dass sich zwischen dem zweiten Spannring und dem Antriebsgehäuses in der Höhenrichtung des Antriebsgehäuses ein Abstand befindet, so dass eine axiale Vorspannung des Außenringes bezüglich des Antriebsgehäuses vorliegt.

Die erfindungsgemäße Drehantriebsvorrichtung hat den Vorteil, dass als Wälzlagereinrichtung ein Wälzlager verwendbar ist, das als Standard-Wälzlager auf dem Markt zur Verfügung steht und keiner speziellen Bearbeitung oder Nachbearbeitung seines Innenringes oder Außenringes bedarf. Das die Wälzlagereinrichtung bildende Wälzlager ist eine selbst zusammenhaltende, auch als selbsthaltend oder selbsttragend bezeichenbare Baueinheit, deren Hauptkomponenten ein Innenring, ein den Innenring radial außen umschließender Außenring sowie eine Mehrzahl von zwischen dem Innenring und dem Außenring angeordneter Wälzkörper sind. Dieses Wälzlager ist derart von einer Unterseite her auf den bevorzugt einstückig ausgebildeten Abtriebskörper aufgesteckt, dass es sich mit seiner oberen Stirnfläche an einer nach unten weisenden Abstützfläche des Abtriebskörpers abstützt. Zusätzlich vorhandene erste Spannmittel sorgen dafür, dass der Innenring seinen Montagezustand beibehält und insbesondere ständig an die zugeordnete Abstützfläche angedrückt wird. Im derart an dem Abtriebskörper fixierten Zustand des Innenringes bilden das Wälzlager und der Abtriebskörper eine als Abtriebsbaugruppe bezeichenbare, selbst zusammenhaltende Baugruppe oder Baueinheit, die wie ein einziges Bauteil handhabbar ist, was die Montage an einem Antriebsgehäuse der Drehantriebsvorrichtung sehr einfach macht. Bei dieser Montage kann die Abtriebsbaugruppe mit ihrer Unterseite voraus in eine Gehäuseausnehmung des Antriebsgehäuses der Drehantriebsvorrichtung eingesteckt werden, bis das Wälzlager mit seinem Außenring an einer nach oben weisenden Abstützfläche des Antriebsgehäuses zur Anlage gelangt. Um diese Stellung zu fixieren, ist die Drehantriebsvorrichtung mit zweiten Spannmitteln ausgestattet, die den Außenring mit der zugeordneten Abstützfläche axial verspannen, wodurch die gesamte Abtriebsbaugruppe am Antriebsgehäuse befestigt ist.

Die dem Innenring zugeordneten ersten Spannmittel verfügen über einen am Abtriebskörper fixierten und insbesondere koaxial zu dem Abtriebskörper angeordneten Spannring, der mit seiner oberen Stirnfläche an der unteren Stirnfläche des Innenringes anliegt, so dass der Innenring axial zwischen der Abstützfläche des Abtriebskörpers und dem Spannring angeordnet ist. Die zweiten Spannmittel verfügen über einen an dem Antriebsgehäuse fixierten Spannring, der mit seiner unteren Stirnfläche an der oberen Stirnfläche des Außenringes anliegt, wobei der Außenring axial zwischen der erwähnten Abstützfläche und dem Spannring angeordnet ist. Der Spannring der ersten Spannmittel und der Spannring der zweiten Spannmittel ist durch Befestigungsschrauben am Abtriebskörper bzw. am Antriebsgehäuse fixiert. Vorzugsweise wird der Spannring von den Befestigungsschrauben in axialer Richtung durchsetzt. Mit Hilfe dieser Befestigungsschrauben lässt sich bei Bedarf eine lösbare Verbindung realisieren.

Von Vorteil ist, dass der Innenring mit einer definierten Vorspannung mit dem Abtriebskörper axial verspannt ist. Um dies zu gewährleisten, ist zwischen dem Spannring und dem Abtriebskörper ein geringfügiger axialer Abstand vorhanden. Dieser axiale Abstand resultiert insbesondere daraus, dass der montierte Innenring bezüglich des Abtriebskörpers einen geringfügigen axialen Überstand hat, so dass der Spannring, wenn er stirnseitig an dem Innenring anliegt, einen geringfügigen axialen Abstand zum Abtriebskörper aufweist. Dieser geringfügige Abstand ist zweckmäßigerweise ein Luftspalt. Die Befestigungsschrauben werden anschließend nur so stark festgezogen, dass zwischen dem Spannring und dem Abtriebskörper ein gewisser Abstand verbleibt, so dass sich in dem Spannring eine interne Spannung aufbaut, die dafür sorgt, dass der Innenring axial spielfrei mit dem Abtriebskörper verspannt wird. Vergleichbare Gegebenheiten liegen auch bezüglich des Außenrings des Wälzlagers und des zur Fixierung des Außenringes dienenden Spannringes vor. Hier findet sich ein axialer Abstand zwischen dem Spannring und dem Antriebsgehäuse, wennder Spannring durch Befestigungsschrauben mit dem Antriebsgehäuse verspannt ist.

Vorteilhafte Weiterbildungen der Erfindung gehen aus den Unteransprüchen hervor.

Die ersten Spannmittel sind vorzugsweise so ausgebildet, dass sie ohne Durchdringung des Innenringes mit dem Innenring zusammenwirken. Die zweiten Spannmittel sind vorzugsweise so ausgebildet, dass sie ohne Durchdringung des Außenringes mit dem Außenring zusammenwirken. Vorzugsweise sind die Spannmittel so ausgebildet, dass sie jeweils ausschließlich diejenige Stirnfläche des zugeordneten Innenringes oder Außenringes beaufschlagen, die der an der zugeordneten Abstützfläche anliegenden Stirnfläche entgegengesetzt ist.

Die zweiten Spannmittel und insbesondere der zweite Spannring sind zweckmäßigerweise in der Höhenrichtung des Antriebsgehäuses vollständig versenkt im Antriebsgehäuse aufgenommen. Auf diese Weise ergibt sich an der Gehäuse-Oberseite des Antriebsgehäuses eine einheitliche Oberfläche.

Mindestens einer der Spannringe und vorzugsweise jeder der Spannringe ist zweckmäßigerweise scheibenförmig flach ausgebildet. Vorzugsweise besteht der betreffende Spannring aus Stahlblech. Je nach Breite des Ringkörpers des Spannringes können Befestigungslöcher, die einen Durchgriff der Spannschrauben ermöglichen, unmittelbar in dem Ringkörper ausgebildet sein oder auch in von dem Ringkörper wegragenden Befestigungslaschen.

Zweckmäßigerweise sind sowohl der Innenring als auch der Außenring des Wälzlagers als geschlossener, keinerlei Durchbrechungen aufweisender Ringkörper ausgebildet. Dies ist ein spezielles Merkmal standardmäßiger Wälzlager, die in vorteilhafter Weise zur Realisierung der Wälzlagereinrichtung verwendbar sind.

Bei dem Wälzlager handelt es sich vorzugsweise um ein Kugellager, insbesondere um ein Rillenkugellager. Prinzipiell kann aber beispielsweise auch ein Rollenlager oder ein Nadellager zum Einsatz kommen.

Zweckmäßigerweise verfügt jede Antriebseinheit der Drehantriebsvorrichtung über zwei axial zueinander beabstandete und abdichtend gleitverschieblich an der Wandung des zugeordneten, als Antriebsraum ausgebildeten länglichen Raumes anliegende Kopfabschnitte sowie über einen sich zwischen den beiden Kopfabschnitten erstreckenden, die Antriebsverzahnung aufweisenden Zahnstangenabschnitt.

Wenn die Abtriebsbaugruppe in das Antriebsgehäuse eingesetzt ist, ist der Außenring des Wälzlagers zweckmäßigerweise mit zumindest einem Teil seiner Höhe in einem Zentrierabschnitt der Gehäuseausnehmung aufgenommen, der eine die Abstützfläche des Antriebsgehäuses für den Außenring bildende ringförmige Grundfläche hat. Der Zentrierabschnitt hat zweckmäßigerweise auch eine periphere Seitenwand, durch die der Außenring quer zur Achsrichtung der Drehachse allseits abgestützt ist.

Nachfolgend wird die Erfindung anhand der beiliegenden Zeichnung näher erläutert. In dieser zeigen:

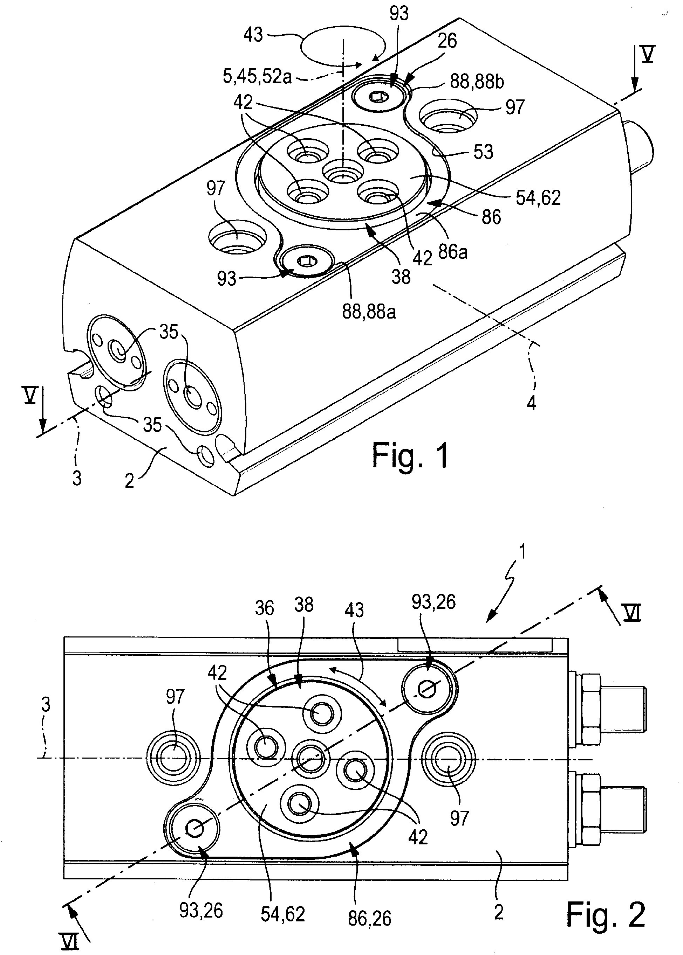

- Figur 1: eine bevorzugte Ausführungsform der erfindungsgemäßen fluidbetätigten Drehantriebsvorrichtung in einer perspektivischen Außenansicht mit Blick auf die Gehäuse-Oberseite des Antriebsgehäuses,
- Figur 2: eine Draufsicht der Drehantriebsvorrichtung aus Figur 1 mit Blick auf die Gehäuse-Oberseite, wobei die Blickrichtung mit der Gehäuse-Höhenrichtung zusammenfällt,

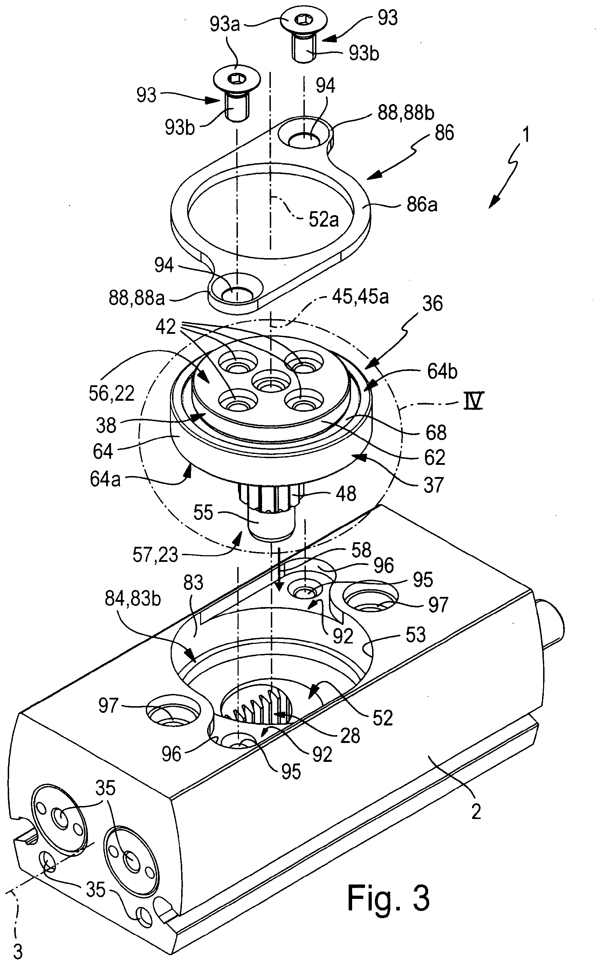

- Figur 3: die Drehantriebsvorrichtung aus Figur 1 in einer Explosionsdarstellung, wobei in dem strickpunktiert umrahmten Bereich eine bevorzugte Ausgestaltung der Abtriebsbaugruppe ersichtlich ist,

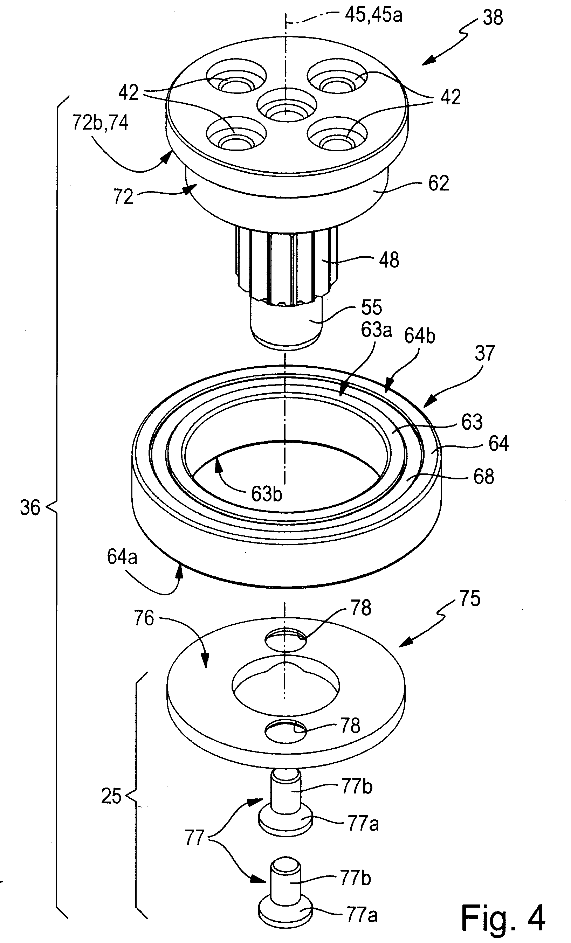

- Figur 4: eine separate Explosionsdarstellung der in Figur 3 in dem umrahmten Bereich IV abgebildeten Abtriebsbaugruppe,
- Figur 5: einen Längsschnitt durch die Drehantriebsvorrichtung in einer zur Drehachse des Abtriebskörpers parallelen Ebene und gemäß Schnittlinie V-V aus Figuren 1 und 6, und
- Figur 6: einen schrägen Querschnitt durch die Drehantriebsvorrichtung gemäß Schnittebene VI-VI aus Figuren 2 und 5.

Die in ihrer Gesamtheit mit Bezugsziffer 1 bezeichnete fluidbetätigte Drehantriebsvorrichtung ist zur Betätigung mittels Fluidkraft ausgelegt und lässt sich mittels eines fluidischen und bevorzugt gasförmigen Druckmediums antreiben. Vorzugsweise ist Druckluft als Antriebsmedium vorgesehen.

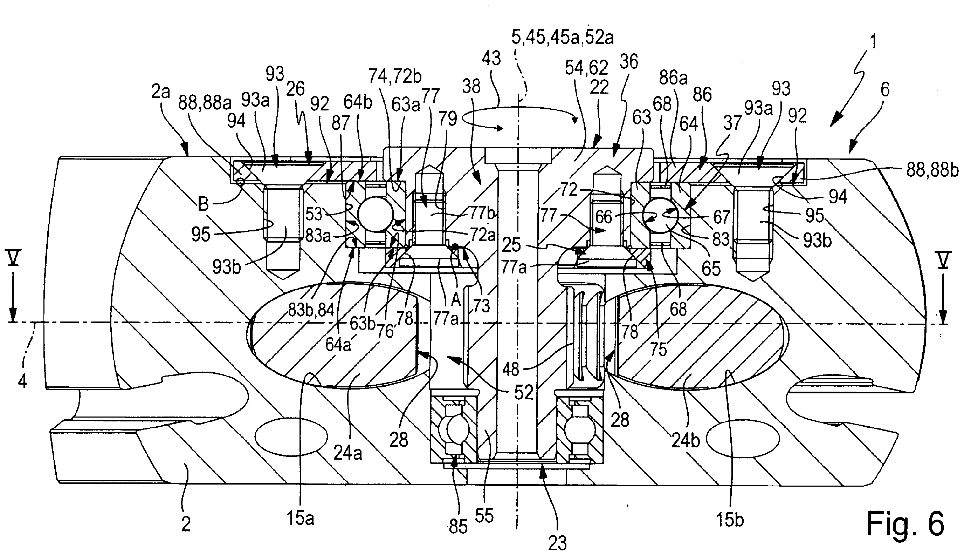

Die Drehantriebsvorrichtung 1 verfügt über ein vorzugsweise längliches und insbesondere aus Metall bestehendes Gehäuse, das als Antriebsgehäuse 2 bezeichnet sei. Das Antriebsgehäuse 2 erstreckt sich entlang einer strichpunktiert angedeuteten gedachten Hauptachse 3, bei der es sich zweckmäßigerweise um die Längsachse des Antriebsgehäuses 2 handelt. In Figur 6 verläuft die Hauptachse 3 rechtwinkelig zur Zeichenebene.

Das Antriebsgehäuse 2 hat außer der Hauptachse 3 auch noch eine zu der Hauptachse 3 rechtwinkelige Querachse 4 und eine sowohl zu der Hauptachse 3 als auch zu der Querachse 4 rechtwinkelige Hochachse 5, deren Achsrichtung eine Gehäuse-Höhenrichtung definiert.

Das Antriebsgehäuse 2 hat eine Gehäuse-Oberseite 6, die in einer bevorzugten Gebrauchsstellung der Drehantriebsvorrichtung 1 nach oben weist. An dieser Gehäuse-Oberseite 6 hat das Antriebsgehäuse 2 eine erste Außenfläche, die zur besseren Unterscheidung als obere Außenfläche 2a bezeichnet sei. Die Drehantriebsvorrichtung 1 kann mit beliebiger räumlicher Ausrichtung betrieben werden, wobei die Gehäuse-Oberseite 6 beispielsweise horizontal oder auch vertikal nach unten weist.

Vorzugsweise hat das Antriebsgehäuse 2 rechtwinkelig zur Hauptachse 3 einen länglichen Querschnitt. Es handelt sich insbesondere um einen rechteckähnlichen Querschnitt, wobei eine der beiden längeren Seiten des rechteckähnlichen Querschnittes von der oberen Außenfläche 2a definiert wird.

Im Innern des Antriebsgehäuses 2 sind zwei jeweils eine Längserstreckung aufweisende, erste und zweite längliche Räume 15a, 15b ausgebildet, die aufgrund ihrer Funktion im Folgenden auch als Antriebsräume 15a, 15b bezeichnet werden. Die länglichen Räume 15a, 15b haben jeweils eine Längsachse 16a, 16b, die parallel zueinander ausgerichtet sind und die sich insbesondere auch parallel zu der Hauptachse 3 erstrecken. Die beiden länglichen Räume 15a, 15b sind in Achsrichtung der Querachse 4 mit Abstand nebeneinander angeordnet, wobei ihre Längsachsen in der Gehäuse-Höhenrichtung zweckmäßigerweise auf gleicher Höhe liegen. Sie sind mit Abstand nebeneinander angeordnet und durch eine sich zwischen ihnen erstreckende, insbesondere von einem einstückigen Bestandteil des Antriebsgehäuses 2 gebildete Zwischenwand 17 voneinander abgetrennt. Vorzugsweise hat jeder längliche Raum 15a, 15b einen runden und bevorzugten kreisrunden Querschnitt. Stirnseitig beidseits ist jeder längliche Raum 15a, 15b von einem Gehäusedeckel 18a, 18b verschlossen.

Die beiden länglichen Räume 15a, 15b werden zum rotativen Antreiben eines am Antriebsgehäuse 2 drehbar gelagerten Abtriebskörpers 38 genutzt. Die Drehachse des Abtriebskörpers 38 ist bei 45 angedeutet. Sie fällt zweckmäßigerweise mit der Längsachse 45a des bevorzugt eine längliche Gestalt aufweisenden Abtriebskörpers 38 zusammen.

Es besteht die Möglichkeit, nur einen der beiden länglichen Räume 15a, 15b als Antriebsraum zu nutzen und den anderen länglichen Raum funktionslos auszubilden oder für einen anderen Zweck einzusetzen, beispielsweise zu Diagnosezwecken. Wird nur ein Antriebsraum 15a oder 15b benötigt, kann das Antriebsgehäuse 2 insgesamt auch nur mit einem einzigen länglichen Raum 15a oder 15b ausgestattet sein.

In jedem Antriebsraum 15a, 15b ist eine Antriebseinheit 24a, 24b in Achsrichtung der zugeordneten Längsachse 16a, 16b linear verschiebbar angeordnet. Die Linearbewegung der Antriebseinheiten 24a, 24b kann durch gesteuerte Fluidbeaufschlagung mit dem weiter oben schon erwähnten Antriebsmedium hervorgerufen werden. Mindestens einer der Gehäusedeckel 18a, 18b jedes Antriebsraumes 15a, 15b kann als Anschlagelement zur Hubbegrenzung der betreffenden Antriebseinheit 24a, 24b ausgebildet sein und zu diesem Zweck eventuell auch über ein Endlagen-Dämpfungsmittel 19 verfügen.

Zweckmäßigerweise verfügt jede Antriebseinheit 24a, 24b über zwei in Achsrichtung der Längsachse 16a, 16b mit Abstand zueinander angeordnete Kopfabschnitte 49, 50, die über einen sich zwischen ihnen erstreckenden Zahnstangenabschnitt 27 miteinander verbunden sind. Jeder Zahnstangenabschnitt 27 weist an seiner der Zwischenwand 17 zugewandten Längsseite eine insbesondere zahnstangenartig ausgebildete Antriebsverzahnung 28 auf, welche sich in Achsrichtung der zugeordneten Längsachse 16a, 16b erstreckt.

Vorzugsweise besteht jede Antriebsverzahnung 28 aus einer Mehrzahl von in einer gemeinsamen Ebene angeordneten und in Achsrichtung der Längsachse 16a, 16b aufeinanderfolgend angeordneten Zähnen, die sich jeweils quer und insbesondere rechtwinkelig zu der genannten Längsachse 16a, 16b erstrecken.

Vorzugsweise ist die Antriebsverzahnung 28 ein einstückiger Bestandteil des Zahnstangenabschnittes 27, kann allerdings auch als separater Körper ausgebildet sein.

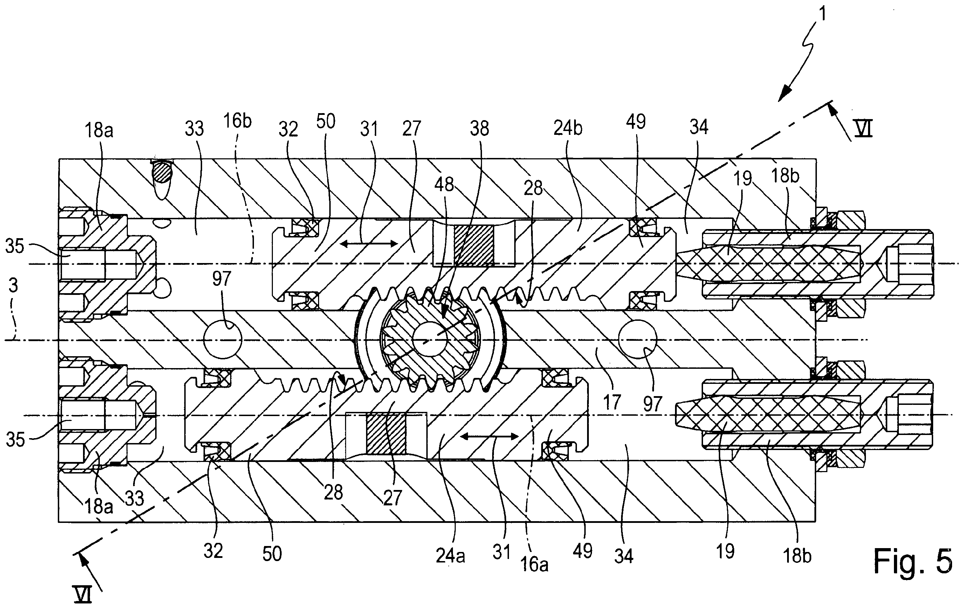

Jeder Kopfabschnitt 49, 50 steht über eine von ihm getragene ringförmige Dichtungsanordnung 32 in dynamischem Dichtkontakt mit der peripheren Wandung des zugeordneten Antriebsraumes 15a, 15b. Auf diese Weise wird jeder Antriebsraum 15a, 15b fluiddicht in zwei Arbeitskammern 33, 34 unterteilt, die über ein internes, von außen her zugängliches Fluidkanalsystem 35 gesteuert mit dem fluidischen Antriebsmedium beaufschlagbar sind. Hierbei können die beiden Arbeitskammern 33, 34 in derart aufeinander abgestimmter Weise fluidbeaufschlagt oder druckentlastet werden, dass die beiden Antriebseinheiten 24a, 24b gegensinnige Linearbewegungen 31 ausführen, die in Figur 5 durch Doppelpfeile angedeutet sind.

Die Linearbewegungen 31 der Abtriebskörper 38 werden durch Zusammenwirken der Antriebsverzahnungen 28 mit einem Abtriebszahnkranz 48 des Abtriebskörpers 38 in eine Drehbewegung 43 des Abtriebskörpers 38 umgewandelt. Die Drehrichtung der Drehbewegung 43 hängt von der Bewegungsrichtung der Antriebseinheiten 24a, 24b ab. Eine hin- und hergehende Linearbewegung 31 der Antriebseinheiten 24a, 24b führt zu einer oszillierenden Drehbewegung 43 des Abtriebskörpers 38.

Der Abtriebszahnkranz 48 ist zweckmäßigerweise ein einstückiger Bestandteil des Abtriebskörpers 38.

In dem Antriebsgehäuse 2 ist eine Gehäuseausnehmung 52 ausgebildet, die mit einer oberen Ausnehmungsmündung 53 an der Gehäuse-Oberseite 6 offen ist. Sie erstreckt sich ausgehend von dieser ersten Ausnehmungsmündung 53 in der Gehäuse-Höhenrichtung 5 ins Innere des Antriebsgehäuses 2 hinein, wobei sie sich zwischen den beiden Antriebsräumen 15a, 15b erstreckt. Die Gehäuseausnehmung 52 hat eine Längsachse 52a, die die gleiche Ausrichtung hat wie die Hochachse 5 des Antriebsgehäuses 2.

Die Gehäuseausnehmung 52 erstreckt sich auch in der Zwischenwand 17 und unterteilt die Zwischenwand 17 derart, dass die beiden länglichen Räume 15a, 15b miteinander verbunden sind. Dabei erstreckt sich die Gehäuseausnehmung 52 in dem Bereich, in dem sich auch die beiden Antriebsverzahnungen 28 befinden.

Der Abtriebskörper 38 taucht durch die obere Ausnehmungsmündung 53 hindurch in die Gehäuseausnehmung 52 ein und steht im Bereich der die Zwischenwand 17 durchsetzenden Querverbindung gleichzeitig mit beiden Antriebverzahnung 28 in Verzahnungseingriff. Der Abtriebszahnkranz 48 ist nach Art eines Ritzels ringförmig in sich geschlossen und erstreckt sich konzentrisch um die Längsachse 45a des Abtriebskörpers 38 herum. Der Verzahnungseingriff führt in der schon geschilderten Weise dazu, dass die Linearbewegung 31 der Antriebseinheiten 24a, 24b eine Drehbewegung 43 des Abtriebskörpers 38 um die mit der Längsachse 45a zusammenfallende Drehachse 45 herum hervorruft.

Die Drehbewegung 43 lässt sich an mindestens einer außerhalb des Antriebsgehäuses 2 an dem Abtriebskörper 38 ausgebildeten Befestigungsschnittstelle 42 abgreifen. Eine solche, dem Kraftabgriff dienende Befestigungsschnittstelle 42 kann beispielsweise ein Gewindeloch sein, das von einer Oberseite 22 her in den Abtriebskörper 38 eingebracht ist.

Zur besseren Unterscheidung sei die vom Antriebsgehäuse 2 wegweisende axiale Seite des Abtriebskörpers 38 als Oberseite 22 des Abtriebskörpers 38 bezeichnet. Mit der entgegengesetzt orientierten axialen Seite voraus, die zur besseren Unterscheidung als Unterseite 23 bezeichnet sei, ist der Abtriebskörper 38 von der Gehäuse-Oberseite 6 her in die Gehäuseausnehmung 52 eingesetzt.

Beim Ausführungsbeispiel ist der Abtriebskörper 38 mit mehreren an der Oberseite 22 zugänglichen Befestigungsschnittstellen 42 ausgestattet.

An der mindestens einen Befestigungsschnittstelle 42 kann eine Komponente befestigt werden, die mittels der Drehantriebsvorrichtung 1 rotativ bewegt werden soll. Dabei kann es sich beispielsweise um eine Greifvorrichtung handeln, die zum Umpositionieren von Werkstücken eingesetzt wird.

Die mindestens eine Befestigungsschnittstelle 42 ist zweckmäßigerweise Bestandteil eines tellerförmigen Endabschnittes 54 des Abtriebskörpers 38, der in der Gehäuseausnehmung 52 in einem der oberen Ausnehmungsmündung 53 zugeordneten Bereich angeordnet ist. Dieser tellerförmige Endabschnitt 54 hat zwei einander entgegengesetzt orientierte Stirnseiten, von denen in der illustrierten Ausrichtung der Drehantriebsvorrichtung 1 die eine nach oben und die andere nach unten weist. An die untere Stirnseite des tellerförmigen Endabschnittes 54 schließt sich koaxial eine Abtriebswelle 55 des Abtriebskörpers 38 an, die zweckmäßigerweise einstückig mit dem tellerförmigen Endabschnitt 54 ausgebildet ist und die einen geringeren Durchmesser hat als der tellerförmige Endabschnitt 54. Die Abtriebswelle 55 weist an ihrem Außenumfang den Abtriebszahnkranz 48 auf.

Der Abtriebskörper 38 ist Bestandteil einer Abtriebsbaugruppe 36, zu der außerdem auch noch ein Wälzlager 37 gehört, unter dessen Mitwirkung der Abtriebskörper 38 an dem Antriebsgehäuse 2 drehbar gelagert bzw. lagerbar ist, um bezüglich der Drehachse 45 verdreht werden zu können. Das Wälzlager 37 ist an dem Abtriebskörper 38 mittels ersten Spannmitteln 25 der Abtriebsbaugruppe 36 befestigt, so dass der Abtriebskörper 38 und das Wälzlager 37 zusammengehalten werden und sich die erwähnte Abtriebsbaugruppe 36 ergibt, die wie ein einziges Bauteil handhabbar ist, was den Zusammenbau mit dem Antriebsgehäuse 2 sehr erleichtert.

Die den Abtriebskörper 38 und das Wälzlager 37 enthaltende Abtriebsbaugruppe 36 hat eine axial gleich wie die Oberseite 22 des Abtriebskörpers 38 orientierte Oberseite 56 und eine axial gleich wie die Unterseite 23 des Abtriebskörpers 38 orientierte Unterseite 57. Beim Zusammenbau der Drehantriebsvorrichtung 1 ist die Abtriebsbaugruppe 36 mit ihrer Unterseite 57 voraus im Rahmen einer durch einen Pfeil illustrierten Einsteckbewegung 58 durch die obere Ausnehmungsmündung 53 hindurch in die Gehäuseausnehmung 52 einsteckbar.

Das Wälzlager 37 ist koaxial auf den Abtriebskörper 38 aufgesteckt. Zweckmäßigerweise liegt das Wälzlager 37 auf gleicher axialer Höhe mit dem tellerförmigen Endabschnitt 54, so dass es diesen tellerförmigen Endabschnitt 54 an seinem radialen Außenumfang konzentrisch umschließt. Das Wälzlager 37 ist zweckmäßigerweise an diesem tellerförmigen Endabschnitt 54 befestigt, um die Abtriebsbaugruppe 36 zu bilden.

Vorzugsweise hat der Abtriebskörper 38 einen einstückigen Abtriebsabschnitt 62, der einerseits unmittelbar die mindestens eine Befestigungsschnittstelle 42 aufweist und andererseits unmittelbar das Wälzlager 37 trägt. Der Abtriebsabschnitt 62 ist vorzugsweise von dem tellerförmigen Endabschnitt 54 gebildet. Die zweckmäßigerweise vorhandene Abtriebswelle 55 ist insbesondere einstückig mit dem Abtriebsabschnitt 62 ausgebildet.

Das Wälzlager 37 ist von sogenannter selbsthaltender Bauart. Die das Wälzlager 37 bildenden Wälzlagerkomponenten halten also von sich aus zusammen, ohne dass es einer zusätzlichen externen Befestigungsstruktur bedürfte. Mit anderen Worten kann das Wälzlager 37 als individuelles Bauteil gehandhabt werden, ohne dass seine Wälzlagerkomponenten auseinanderfallen.

Das Wälzlager 37 hat als Wälzlagerkomponenten einen Innenring 63, einen den Innenring 63 mit radialem Abstand konzentrisch umschließenden Außenring 64 und eine Mehrzahl von Wälzkörpern 65, die zwischen dem Innenring 63 und dem Außenring 64 angeordnet sind. Die Wälzkörper 65 liegen an einer am radialen Außenumfang des Innenringes 63 ausgebildeten inneren Wälzlagerfläche 63 und zugleich an einer am radialen Innenumfang des Außenringes 64 ausgebildeten äußeren Wälzlagerfläche 67 an und können an diesen beiden Wälzlagerflächen 66, 67 abrollen, wenn zwischen dem Innenring 63 und dem Außenring 64 eine relative Drehbewegung stattfindet.

Jede Wälzlagerfläche 66, 67 ist zweckmäßigerweise von der Wandfläche einer in den zugeordneten Innenring 63 bzw. Außenring 64 eingebrachten Ringnut bzw. Rille gebildet, in die die Wälzkörper 65 mit einem Teil Ihres Umfanges eintauchen. Auf diese Weise ergibt sich ein radialer Hinterschnitt zwischen den Wälzkörpern 65 sowie dem Innenring 63 und dem Außenring 64, was dazu führt, dass die Wälzlagerkomponenten 63, 64, 65 zusammengehalten werden.

Die Wälzkörper 65 können untereinander mittels eines in dem Zwischenraum zwischen dem Innenring 63 und dem Außenring 64 angeordneten Käfigelementes auf Abstand gehalten werden.

Vorzugsweise ist das Wälzlager 37 als geschlossenes Wälzlager ausgebildet und ist axial beidseits der Wälzkörper 65 mit jeweils einem sich zwischen dem Innenring 63 und dem Außenring 64 erstreckenden ringförmigen Verschlusselement 68 als weitere Wälzlagerkomponenten versehen.

Bei dem Wälzlager 37 handelt es sich vorzugsweise um ein Kugellager, wobei die Wälzkörper 65 als Kugelkörper ausgebildet sind. Bevorzugt ist das Wälzlager 37 ein Rillenkugellager.

Vorteilhaft ist es weiterhin, wenn das Wälzlager 37 ein Standard-Wälzlager ist, das handelsüblich zur Verfügung steht und keine spezielle Anpassung zur Verwendung mit der Drehantriebsvorrichtung 1 erfährt. Auf diese Weise kann die Drehantriebsvorrichtung 1 sehr kostengünstig aufgebaut werden. Sowohl der Innenring 63 als auch der Außenring 64 des Wälzlagers 37 ist insbesondere als durchbrechungsloser geschlossener Ringkörper ausgeführt.

Das Wälzlager 37 ist von der Unterseite 23 her koaxial auf den Abtriebskörper 38 aufgesteckt. Dabei nimmt der Innenring 63 eine Position auf einem Lagersitz 72 ein, der an dem Abtriebskörper 38 und insbesondere an dessen tellerförmigem Endabschnitt 54 bzw. Abtriebsabschnitt 62 ausgebildet ist. Dieser Lagersitz 72 setzt sich zusammen aus einer zur der Längsachse 45a konzentrischen, zylindrische Sitzfläche 72a, die nach radial außen orientiert ist, und aus einer axial in Richtung der Unterseite 23 weisenden Sitz-Grundfläche 72b. Der Lagersitz 72 ist zur Unterseite 73 des Abtriebsabschnittes 62 hin offen.

Der Innenring 63 umschließt radial spielfrei die zylindrische Sitzfläche 72a und stützt sich mit einer nach oben weisenden oberen Stirnfläche 63a an der als Abstützfläche 74 des Abtriebskörpers 38 fungierenden Sitz-Grundfläche 72b axial ab.

Die zylindrische Sitzfläche 72a ist insbesondere so ausgelegt, dass sich das Wälzlager 37 mit seinem Innenring 63 im Wesentlichen spielfrei mit geringem Kraftaufwand von unten her auf den Lagersitz 72 aufschieben lässt.

Die schon erwähnten ersten Spannmittel 25 dienen dazu, den Innenring 63 und somit das gesamte Wälzlager 37 an dem Abtriebskörper 38 zu fixieren. Der Innenring 63 wird durch die ersten Spannmittel 25 mit der Abstützfläche 74 des Abtriebskörpers 38 axial verspannt.

Vorzugsweise wirken die ersten Spannmittel 25 ohne Durchdringung des Innenringes 63 mit dem Innenring 63 zusammen. Als besonders vorteilhaft wird es angesehen, wenn die ersten Spannmittel 25 die der oberen Stirnfläche 63a entgegengesetzte untere Stirnfläche 63b des Innenringes 63 beaufschlagen, wobei sie zweckmäßigerweise ausschließlich an der unteren Stirnfläche 63b auf den Innenring 63 einwirken.

Die ersten Spannmittel 25 enthalten zweckmäßigerweise einen Spannring 75, der koaxial auf den Abtriebskörper 38 aufgesetzt ist, so dass der Innenring 63 axial zwischen der Abstützfläche 74 und dem Spannring 75 angeordnet ist.

Der Spannring 75 ist vorzugsweise scheibenförmig flach ausgebildet und hat in radialer Richtung eine derartige Breite, dass er sowohl dem Abtriebsabschnitt 62 als auch dem Innenring 63 an der Unterseite vorgelagert ist. Ein äußerer Randabschnitt der nach oben weisenden Stirnfläche 76 des Spannringes 75 liegt an der unteren Stirnfläche 73b des Innenringes 63 an.

Zwischen dem Abtriebsabschnitt 62 und dem unterhalb dieses Abtriebsabschnittes 62 liegenden Abschnitt des Spannringes 75 befindet sich ein axialer Abstand A. Dieser ergibt sich exemplarisch daraus, dass der Innenring 63 ein Stück weit über die Unterseite des Abtriebsabschnittes 62 vorsteht und der Spannring 75 an seiner Oberseite eine ebene obere Stirnfläche 76 hat.

Die ersten Spannmittel 25 enthalten außer dem Spannring 65 zweckmäßigerweise auch noch mehrere Befestigungsschrauben 77, mit deren Hilfe der Spannring 75 mit dem Abtriebskörper 38 und insbesondere mit dem Abtriebsabschnitt 62 axial verspannt ist, so dass er gleichzeitig aufgrund des Kontaktes zwischen seiner oberen Stirnfläche 76 und dem Innenring 63 diesen Innenring 63 axial mit der Abstützfläche 74 des Abtriebskörpers 38 verspannt. Auf diese Weise ist der Innenring 63 axial spielfrei am Abtriebskörper 38 gehalten.

Die Befestigungsschrauben 74 sind von unten her in den Abtriebsabschnitt 62 des Abtriebskörpers 38 eingeschraubt, wobei sie jeweils mit ihrem Schraubenkopf 77a axial drückend auf den Spannring 75 einwirken. Die Befestigungsschrauben 77 sind insbesondere so platziert, dass sie denjenigen Abschnitt des Spannringes 75 beaufschlagen, der dem Abtriebsabschnitt 62 mit axialem Abstand A vorgelagert ist. Auf diese Weise erfährt der Spannring 75 eine geringfügige elastische Verformung, aus der ein interner Spannungszustand resultiert, der zur Folge hat, dass der Spannring 75 mit dem äußeren Randabschnitt seiner oberen Stirnfläche 76 eine vorbestimmte axiale Spannkraft auf den Innenring 63 ausübt.

Zweckmäßigerweise ist der Spannring 75 von einer zumindest der Anzahl der Befestigungsschrauben 67 entsprechenden Anzahl von Befestigungslöchern 78 durchsetzt, durch die die Befestigungsschrauben 74 hindurchgreifen, wobei jede Befestigungsschraube 74 mit einem Gewindeschaft 77b in eine zur Unterseite des Abtriebsabschnittes 62 offene Gewindebohrung 79 des Abtriebskörpers 38 eingeschraubt ist.

Zweckmäßigerweise enthalten die ersten Spannmittel 25 nur zwei Befestigungsschrauben 77, die sich bezüglich der Längsachse 45a des Abtriebskörpers 38 diametral gegenüberliegen.

Zur Zentrierung der Abtriebsbaugruppe 36 im Antriebsgehäuse 2 ist die Gehäuseausnehmung 52 in einem sich an die obere Ausnehmungsmündung 53 anschließenden oberen Endabschnitt zweckmäßigerweise so konturiert, dass sich ein Zentrierabschnitt 83 ergibt. Dieser Zentrierabschnitt 83 hat eine radial nach innen orientierte zylindrische Wandfläche 83a, die einen Durchmesser des Zentrierabschnittes 83 definiert, der dem Außendurchmesser des Außenrings 64 des Wälzlagers 37 entspricht. An die zylindrische Wandfläche 83a schließt sich am unteren Ende eine nach oben in Richtung zu der oberen Ausnehmungsmündung 53 orientierte ringförmige Grundfläche 83b an. Bei der Montage der Abtriebsbaugruppe 36 taucht das Wälzlager 37 mit seinem Außenring 64 von oben her spielfrei in den Zentrierabschnitt 83 ein, bis der Außenring 64 mit einer nach unten, also axial ins Innere der Gehäuseausnehmung 52 weisenden unteren Stirnfläche 64a an der ringförmigen Grundfläche 83b zur Anlage gelangt, die mithin eine axiale Abstützfläche 84 des Antriebsgehäuses 2 für den Außenring 64 bildet. Im zusammengebauten Zustand stützt sich also der Außenring 64 des Wälzlagers 37 innerhalb der Gehäuseausnehmung 52 mit einer dem Antriebsgehäuse 2 zugewandten unteren Stirnfläche 64a an einer nach oben weisenden Abstützfläche 84 des Antriebsgehäuses 2 ab.

Durch das radiale Zusammenwirken des Außenumfanges des Außenringes 64 mit der zylindrischen Wandfläche 83a des Zentrierabschnittes 83 wird das Wälzlager 37 und mithin die gesamte Abtriebsbaugruppe 36 im Antriebsgehäuse 2 zentriert.

Um den Abtriebskörper 38 besonders gut gegen Kippbelastungen abzustützen, kann zusätzlich zu dem Wälzlager 37 eine diesbezüglich in Achsrichtung der Drehachse 45 beabstandete weitere Drehlagereinrichtung 85 zwischen dem Abtriebskörper 38 und dem Antriebsgehäuse 2 angeordnet sein. Diese weitere Drehlagereinrichtung 85 ist insbesondere ebenfalls als Wälzlager ausgeführt. Die weitere Drehlagereinrichtung 84 ist vorzugsweise dem dem Abtriebsabschnitt 62 axial entgegengesetzten unteren Endabschnitt des Abtriebskörpers 38 zugeordnet, wobei sie insbesondere mit dem Endabschnitt der Abtriebswelle 55 zusammenwirkt.

Die Drehlagereinrichtung 85 wird zweckmäßigerweise vor der Montage der Abtriebsbaugruppe 36 in die Gehäuseausnehmung 52 eingesetzt. Beim Einstecken der Abtriebsbaugruppe 36 in die Gehäuseausnehmung 52 im Rahmen der Einsteckbewegung 58 taucht der untere Endabschnitt des Abtriebskörpers 38 in die Drehlagereinrichtung 85 ein und erfährt auf diese Weise radiale Abstützung in Verbindung mit einer Drehlagerung.

Das Wälzlager 37 ist durch zweite Spannmittel 26, die zwischen dem Antriebsgehäuse 2 und dem Außenring 64 wirksam sind, mit der nach oben weisenden Abstützfläche 84 des Antriebsgehäuses 2 axial verspannt. Auf diese Weise ist der Außenring 64 axial spielfrei am Antriebsgehäuse 2 befestigt.

Die zweiten Spannmittel 26 wirken zweckmäßigerweise ohne Durchdringung des Außenringes 64 mit dem Außenring 64 zusammen. Insbesondere sind die zweiten Spannmittel 26 so ausgebildet, dass sie die der unteren Stirnfläche 64a axial entgegengesetzte obere Stirnfläche 64b des Außenringes 64 beaufschlagen, wobei sie auf den Außenring 64 zweckmäßigerweise ausschließlich an dessen oberer Stirnfläche 64b einwirken.

Die zweiten Spannmittel 26 enthalten zweckmäßigerweise einen Spannring 86, der an die Gehäuse-Oberseite 6 des Antriebsgehäuses 2 angesetzt ist und dessen Innendurchmesser kleiner ist als der Außendurchmesser des Außenringes 64, so dass er den Außenring 64 an dessen oberer Stirnfläche 64b radial überlappt. Der Spannring 86 der zweiten Spannmittel 26 hat zweckmäßigerweise einen Innendurchmesser, der größer ist als der Außendurchmesser des Abtriebskörpers 38, so dass er insbesondere auch den Abtriebsabschnitt 62 radial außen mit radialem Spiel umschließt.

Der Spannring 86 hat eine nach unten, also in Richtung des Innern der Gehäuseausnehmung 52 weisende untere Stirnfläche 87. Mit dieser unteren Stirnfläche 87 liegt der Spannring 86 der zweiten Spannmittel 26 an der oberen Stirnfläche 64b des Außenringes 64 an. Es ist insbesondere ein radial innen liegender ringförmiger Randbereich der unteren Stirnfläche 87 des Spannringes 86, der die obere Stirnfläche 64b des Außenringes 64 beaufschlagt.

Derjenige Flächenabschnitt der unteren Stirnfläche 87 des Spannringes 86, der radial außerhalb des am Außenring 64 anliegenden Flächenabschnittes der unteren Stirnfläche 87 liegt, ist dem Antriebsgehäuse 2 in Achsrichtung seiner Hochachse 5 zweckmäßigerweise mit einem bevorzugt nur geringfügigen axialen Abstand B vorgelagert. Der zugeordnete Abschnitt des Spannringes 86 sei im Folgenden als Befestigungsabschnitt 88 bezeichnet. Er liegt mit dem erwähnten axialen Abstand B einem in Achsrichtung der Hochachse 5 nach oben weisenden oberen Flächenabschnitt 92 des Antriebsgehäuses 2 gegenüber. Beim Ausführungsbeispiel besteht der Befestigungsabschnitt 88 aus zwei von einem Ringkörper 86a des Spannringes 86 nach radial außen wegragenden Befestigungslaschen 88a, 88b, die sich bezüglich des Zentrums des Spannringes 86 vorzugsweise diametral gegenüberliegen. Der Ringkörper 86a des Spannrings 86 liegt der oberen Stirnfläche 64b des Spannringes 64 axial gegenüber und weist den den Außenring 64 axial beaufschlagenden Flächenabschnitt der unteren Stirnfläche 87 des Spannrings 86 auf.

Zweckmäßigerweise mittels mehrerer Befestigungsschrauben 93, die von oben her in das Antriebsgehäuse 2 eingeschraubt sind, ist der Spannring 86 der zweiten Spannmittel 26 an dem Antriebsgehäuse 2 so fixiert, dass er mit seiner unteren Stirnfläche 87 auf die obere Stirnfläche 64b des Außenrings 84 des Wälzlagers 37 drückend einwirkt. Exemplarisch enthalten die zweiten Spannmittel 26 zwei Befestigungsschrauben 93, wobei jeweils eine dieser beiden Befestigungsschrauben 93 jeweils einer der beiden Befestigungslaschen 88a, 88b zugeordnet ist. Jede Befestigungslasche 88a, 88b ist von einem Befestigungsloch 94 durchsetzt, durch das von oben her eine der Befestigungsschrauben 93 hindurchgreift, wobei sie sich mit einem Schraubenkopf 93a von oben her an der zugeordneten Befestigungslasche 88a, 88b abstützt und mit einem Gewindeschaft 93b in ein zu dem oberen Flächenabschnitt 92 ausmündendes Gewindeloch 95 des Antriebsgehäuses 2 eingeschraubt ist.

Der axiale Abstand B ergibt sich beim Ausführungsbeispiel dadurch, dass die untere Stirnfläche 87 des Spannrings 86 eben ist, der Außenring 64 des Wälzlagers 37 jedoch geringfügig nach oben über den oberen Flächenabschnitt 92 des Antriebsgehäuses 2 vorsteht.

Beim Festziehen der Befestigungsschrauben 93 erfährt der Spannring 86 im Bereich des Befestigungsabschnittes 88 aufgrund des axialen Abstandes B eine gewisse elastische Verformung, die einen internen Spannungsaufbau im Spannring 86 zur Folge hat, so dass der Außenring 64 mit einer definierten Vorspannung axial bezüglich des Antriebsgehäuses 2 verspannt wird. Auf diese Weise ist der Außenring 64 des Wälzlagers 37 axial unbeweglich im Antriebsgehäuse 2 befestigt.

Insgesamt bildet somit das Wälzlager 37 ein axiales Festlager zur axial unbeweglichen Fixierung des Abtriebskörpers 38 bezüglich des Antriebsgehäuses 2 in Achsrichtung der Hochachse 5.

Zweckmäßigerweise sind das Antriebsgehäuse 2 und die zweiten Spannmittel 26 derart aufeinander abgestimmt, dass die zweiten Spannmittel 26 in der Höhenrichtung des Antriebsgehäuses 2 vollständig versenkt im Antriebsgehäuse 2 zu liegen kommen.

Beim Ausführungsbeispiel wird dies in vorteilhafter Weise dadurch erreicht, dass einerseits die Gehäuseausnehmung 52 im Bereich der oberen Ausnehmungsmündung 53 einen Durchmesser hat, der gleich oder geringfügig größer ist als der Außendurchmesser des Spannringes 86 im Bereich seines Ringkörpers 86a und dass andererseits in die obere Außenfläche 2a eine der Anzahl der Befestigungslaschen 88a, 88b entsprechende Anzahl von Ausnehmungen 96 eingebracht sind, in die jeweils eine der Befestigungslaschen 88a, 88b von oben her eintaucht. Jede Ausnehmung 96 mündet am Außenumfang der Gehäuseausnehmung 52 in die Gehäuseausnehmung 52 ein und bildet mit ihrer Grundfläche den oben erwähnten oberen Flächenabschnitt 92. Die axiale Tiefe der Ausnehmungen 96 ist so gewählt, dass die Befestigungslaschen 88a, 88b komplett darin aufgenommen sind und ebenso auch die Schraubenköpfe 93a, die zweckmäßigerweise versenkt in jeweils eine der Befestigungslaschen 88a, 88b eingreifen.

Der Spannring 86 der zweiten Spannmittel 26 ist zweckmäßigerweise scheibenförmig flach ausgebildet und besteht insbesondere aus einem Stahlblech.

Die beiden zur Fixierung des Spannrings 86 dienenden Gewindelöcher 95 sind zweckmäßigerweise so im Antriebsgehäuse 2 platziert, dass sie auf einander entgegengesetzten Längsseiten der Doppelanordnung von Antriebsräumen 15a, 15b zu liegen kommen. Auf diese Weise besteht die beim Ausführungsbeispiel realisierte Möglichkeit, im Bereich der Zwischenwand 17 ein oder mehrere das Antriebsgehäuse 2 in Achsrichtung der Hochachse 5 durchsetzende Befestigungslöcher 97 auszubilden, die verwendbar sind, um das Antriebsgehäuse 2 an einer Tragstruktur zu befestigen. Die beiden Gewindelöcher 95 sind dabei vorzugsweise in der Achsrichtung der Hauptachse 3 mit axialem Versatz zueinander angeordnet. Eine gedachte gerade Verbindungslinie zwischen den beiden Gewindelöchern 95 schneidet zweckmäßigerweise durch die Drehachse 45.

Abweichend vom Ausführungsbeispiel kann zur Fixierung jedes der beiden Spannringe 75, 86 auch eine andere als die exemplarisch gewählte Anzahl von Befestigungsschrauben 77, 93 vorgesehen sein.

Alternativ zu den Befestigungsschrauben 77, 93 können auch andere Befestigungsmittel zur Fixierung des zugeordneten Spannringes 75, 86 vorgesehen sein, beispielsweise Nieten.

## Patentansprüche

1. Fluidbetätigte Drehantriebsvorrichtung, mit einem Antriebsgehäuse (2), in dem mindestens eine durch gesteuerte Fluidbeaufschlagung linear verschiebbare Antriebseinheit (24a, 24b) angeordnet ist, die an einer Längsseite eine Antriebsverzahnung (28) aufweist, wobei in dem Antriebsgehäuse (2) eine sich in einer Gehäuse-Höhenrichtung erstreckende und zu einer Gehäuse-Oberseite (6) hin ausmündende Gehäuseausnehmung (52) ausgebildet ist, in die von der Gehäuse-Oberseite (6) her und mit einer Unterseite (57) voraus eine Abtriebsbaugruppe (36) eingesteckt ist, die über einen um eine in der Gehäuse-Höhenrichtung orientierte Drehachse (45) drehbaren Abtriebskörper (38) und eine zur Drehlagerung des Abtriebskörpers (38) bezüglich des Antriebsgehäuses (2) dienende Wälzlagereinrichtung verfügt, wobei der Abtriebskörper (38) einen im Innern des Antriebsgehäuses (2) mit der Antriebsverzahnung (28) der mindestens einen Antriebseinheit (24a, 24b) in Verzahnungseingriff stehenden Abtriebszahnkranz (48) und im Bereich seiner Oberseite außerhalb des Antriebsgehäuses (2) mindestens eine dem Kraftabgriff dienende Befestigungsschnittstelle (42) aufweist, wobei die Wälzlagereinrichtung aus einem bezüglich des Antriebsgehäuses (2) und des Abtriebskörpers (38) gesonderten Wälzlager (37) besteht, das zu einer selbst zusammenhaltenden Baueinheit zusammengefügte Wälzlagerkomponenten in Form eines Innenringes (63), eines den Innenring (63) radial außen umschließenden Außenringes (64) und zwischen dem Innenring (63) und dem Außenring (64) angeordneten Wälzkörpern (65) umfasst, wobei das Wälzlager (37) von der dem Antriebsgehäuse (2) zugewandten Unterseite (23) her koaxial auf den Abtriebskörper (38) aufgesteckt ist und sich mit einer nach oben weisenden oberen Stirnfläche (63a) seines Innenringes (63) an einer nach unten weisenden Abstützfläche (74) des Abtriebskörpers (38) abstützt und wobei sich der Außenring (64) innerhalb der Gehäuseausnehmung (52) mit einer dem Antriebsgehäuse (2) zugewandten unteren Stirnfläche (64a) an einer nach oben weisenden Abstützfläche (84) des Antriebsgehäuses (2) abstützt, wobei der Innenring (63) des Wälzlagers (37) durch an dem Abtriebskörper (38) fixierte erste Spannmittel (25) mit der Abstützfläche (74) des Abtriebskörpers (38) axial verspannt ist und wobei der Außenring (64) des Wälzlagers (37) durch an dem Antriebsgehäuse (2) fixierte zweite Spannmittel (26) mit der Abstützfläche (84) des Antriebsgehäuses (2) axial verspannt ist, wobei die ersten Spannmittel (25) einen an dem Abtriebskörper (38) fixierten ersten Spannring (75) aufweisen, der mittels von unten her in den Abtriebskörper (38) eingeschraubter Befestigungsschrauben (77) der ersten Spannmittel (25) mit dem Abtriebskörper (38) verspannt ist und der mit seiner oberen Stirnfläche (76) an der unteren Stirnfläche (63b) des Innenringes (63) anliegt, wobei der Innenring (63) axial zwischen der nach unten weisenden Abstützfläche (74) des Abtriebskörpers (38) und dem ersten Spannring (75) angeordnet ist, und wobei die zweiten Spannmittel (26) einen an dem Antriebsgehäuse (2) fixierten zweiten Spannring (86) aufweisen, der mit seiner unteren Stirnfläche (87) an der oberen Stirnfläche (64b) des Außenringes (64) anliegt, wobei der Außenring (64) axial zwischen der nach oben weisenden Abstützfläche (84) des Antriebsgehäuses (2) und dem zweiten Spannring (86) angeordnet ist, **dadurch gekennzeichnet, dass** der zweite Spannring (86) mittels von oben her in das Antriebsgehäuse (2) eingeschraubter Befestigungsschrauben (93) der zweiten Spannmittel (26) am Antriebsgehäuse (2) fixiert ist, dass sich zwischen dem ersten Spannring (75) und dem Abtriebskörper (38) ein axialer Abstand (A) befindet, so dass eine axiale Vorspannung des Innenringes (63) bezüglich des Abtriebskörpers (38) vorliegt, und dass sich zwischen dem zweiten Spannring (86) und dem Antriebsgehäuses (2) in der Höhenrichtung des Antriebsgehäuses (2) ein Abstand (B) befindet, so dass eine axiale Vorspannung des Außenringes (64) bezüglich des Antriebsgehäuses (2) vorliegt.

2. Fluidbetätigte Drehantriebsvorrichtung nach Anspruch 1, **dadurch gekennzeichnet, dass** die ersten Spannmittel (25) ohne Durchdringung des Innenringes (63) mit dem Innenring (63) zusammenwirken und/oder dass die zweiten Spannmittel (26) ohne Durchdringung des Außenringes (64) mit dem Außenring (64) zusammenwirken.

3. Fluidbetätigte Drehantriebsvorrichtung nach Anspruch 1 oder 2, **dadurch gekennzeichnet, dass** die ersten Spannmittel (25) die der oberen Stirnfläche (63a) entgegengesetzte untere Stirnfläche (63b) des Innenringes (63) beaufschlagen, wobei sie seitens des Innenringes (63) ausschließlich an dessen unterer Stirnfläche (63b) angreifen.

4. Fluidbetätigte Drehantriebsvorrichtung nach einem der Ansprüche 1 bis 3, **dadurch gekennzeichnet, dass** die zweiten Spannmittel (26) die der unteren Stirnfläche (64a) entgegengesetzte obere Stirnfläche (64b) des Außenringes (64) beaufschlagen, wobei sie seitens des Außenringes (64) ausschließlich an dessen oberer Stirnfläche (64b) angreifen.

5. Fluidbetätigte Drehantriebsvorrichtung nach einem der Ansprüche 1 bis 4, **dadurch gekennzeichnet, dass** die zweiten Spannmittel (26) in der Höhenrichtung des Antriebsgehäuses (2) von oben her vollständig versenkt im Antriebsgehäuse (2) angeordnet sind.

6. Fluidbetätigte Drehantriebsvorrichtung nach einem der Ansprüche 1 bis 5, **dadurch gekennzeichnet, dass** der erste und/oder zweite Spannring (75, 86) scheibenförmig flach ausgebildet ist und/oder aus Stahlblech besteht.

7. Fluidbetätigte Drehantriebsvorrichtung nach einem der Ansprüche 1 bis 6, **dadurch gekennzeichnet, dass** sowohl der Innenring (63) als auch der Außenring (64) des Wälzlagers (37) ein durchbrechungsloser Ringkörper ist und/oder dass das Wälzlager (37) ein Kugellager und insbesondere ein Rillenkugellager ist.

8. Fluidbetätigte Drehantriebsvorrichtung nach einem der Ansprüche 1 bis 7, **dadurch gekennzeichnet, dass** in dem Antriebsgehäuse (2) zwei durch eine Zwischenwand (17) voneinander getrennte längliche Räume mit zueinander parallelen und zur Drehachse (45) des Abtriebskörpers (38) rechtwinkeligen Längsachsen (16a, 16b) nebeneinander angeordnet sind, von denen mindestens einer einen Antriebsraum (15a, 15b) bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, wobei zweckmäßigerweise jeder der beiden länglichen Räume einen Antriebsraum (15a, 15b) bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, wobei beide Antriebseinheiten (24a, 24b) mit dem Abtriebszahnkranz (48) des Abtriebskörpers (38) in Verzahnungseingriff stehen.

## Claims

1. Fluid-activated rotary drive device with a drive housing (2), in which is arranged at least one drive unit (24a, 24b) linearly displaceable by controlled fluid impact, which comprises a drive gearing (28) on a longitudinal side, wherein a housing recess (52) extending in a housing height direction and terminating in a housing upper side (6) is formed in the drive housing (2), into which housing recess an output assembly (36) is inserted from the housing upper side (6) and with a lower side (57) in front, which has an output body (38) rotatable about a rotation axis (45) oriented in the housing height direction and a roller bearing arrangement serving for the rotational bearing of the output body (38) with respect to the drive housing (2), wherein the output body (38) has an output sprocket in the interior of the drive housing (2) in toothed engagement with the drive gearing (28) of the at least one drive unit (24a, 24b) and has in the region of its upper side outside the drive housing (2) at least one fastening interface (42) serving for the force take-off, wherein the roller bearing arrangement consists of a roller bearing (37) separate with respect to the drive housing (2) and the output body (38), which roller bearing includes roller bearing components assembled to form an coherent structural unit in the form of an inner ring (63), an outer ring (64) radially externally surrounding the inner ring (63), and rolling elements (65) arranged between the inner ring (63) and the outer ring (64), wherein the roller bearing (37) is mounted from the lower side (33) facing towards the drive housing (2) coaxially on the output body (38) and is supported with an upwardly directed upper front surface (63a) of its inner ring (63) on a downwardly directed supporting surface (74) of the output body (38) and wherein the outer ring (64) within the housing recess (52) is supported with a lower front surface (64a) facing towards the drive housing (2) on an upwardly directed supporting surface (84) of the drive housing (2), wherein the inner ring (63) of the roller bearing (37) is axially braced with the supporting surface (74) of the output body (38) by first clamping means (25) fixed to the output body (38) and wherein the outer ring (64) of the roller bearing (37) is axially braced with the supporting surface (84) of the drive housing (2) by second clamping means (26) fixed to the drive housing (2), wherein the first clamping means (25) have a first clamping ring (75) fixed to the output body (38), which is biased with the output body (38) by means of fastening screws (77) of the first clamping means (25) screwed from underneath into the drive body (38) and which abuts with its upper front surface (76) against the lower front surface (63b) of the inner ring (63), wherein the inner ring (63) is axially arranged between the downwardly directed supporting surface (74) of the output body (38) and the first clamping ring (75), and wherein the second clamping means (26) comprise a second clamping ring (86) fixed to the drive housing (2), which abuts with its lower front surface (87) against the upper front surface (64b) of the outer ring (64), wherein the outer ring (64) is axially arranged between the upwardly directed supporting surface (84) of the drive housing (2) and the second clamping ring (86), **characterised in that** the second clamping ring (86) is fixed to the drive housing (2) by means of fastening screws (93) of the second clamping means (26) screwed from above into the drive housing (2), that there is an axial spacing (A) between the first clamping ring (75) and the output body (38), so that there is an axial biasing of the inner ring (63) with respect to the output body (38), and that there is a spacing (B) between the second clamping ring (86) and the output housing (2) in the height direction of the drive housing, so that there exists an axial biasing of the outer ring (64) with respect to the drive housing (2).

2. Fluid-activated rotary drive device according to Claim 1, **characterised in that** the first clamping means (25) cooperate with the inner ring (63) without penetrating the inner ring (63) and/or that the second clamping means (26) cooperate with the outer ring (64) without penetrating the outer ring (64).

3. Fluid-activated rotary drive device according to Claim 1 or 2, **characterised in that** the first clamping means (25) impact on the lower front surface (63b) of the inner ring (63) opposite the upper front surface (63a), wherein they engage with the inner ring (63) exclusively on its lower front surface (63b).

4. Fluid-activated rotary drive device according to any one of Claims 1 to 3, **characterised in that** the second clamping means (26) impact on the upper front surface (64b) of the outer ring (64) opposite the lower front surface (64a), wherein they engage with the outer ring (64) exclusively on its upper front surface (64b).

5. Fluid-activated rotary drive device according to any one of Claims 1 to 4, **characterised in that** the second clamping means (26) are arranged in the height direction of the drive housing (2) from above completely countersunk in the drive housing (2).

6. Fluid-activated rotary drive device according to any one of Claims 1 to 5, **characterised in that** the first and/or second clamping ring (75, 86) is/are formed as flat discs and/or consist of steel sheet.

7. Fluid-activated rotary drive device according to any one of Claims 1 to 6, **characterised in that** the inner ring (63) and also the outer ring (64) of the roller bearing (37) is a continuous unbroken annular body and/or that the roller bearing (37) is a ball bearing and in particular a groove ball bearing.

8. Fluid-activated rotary drive device according to any one of Claims 1 to 7, **characterised in that** two longitudinal spaces separated from one another by a partition (17) with right-angle longitudinal axes (16a, 16b) parallel to one another and to the rotation axis (45) of the output body (38) are arranged next to one another in the drive housing (2), at least one of which forms a drive space (15a, 15b) in which is arranged a drive unit (24a, 24b) linearly displaceable by controlled fluid impact, which drive unit has a drive gearing (28) on its longitudinal side facing towards the partition (17), wherein expediently each of the two longitudinal spaces forms a drive space (15a, 15b) in which is arranged a drive unit (24a, 24b) linearly displaceable by controlled fluid impact, which drive unit has a drive gearing (28) on its longitudinal side facing towards the partition (17), wherein both drive units (24a, 24b) are in toothed engagement with the output sprocket (48) of the output body (38).

## Revendications

1. Dispositif d'entraînement en rotation actionné par un fluide, avec un boîtier d'entraînement (2), dans lequel est disposée au moins une unité d'entraînement (24a, 24b) pouvant être coulissée de manière linéaire par la contrainte commandée exercée par un fluide, laquelle présente, au niveau d'un côté longitudinal, une denture d'entraînement (28), dans lequel un évidement de boîtier (52) s'étendant dans le sens de la hauteur de boîtier et débouchant en direction d'un côté supérieur de boîtier (6) est réalisé dans le boîtier d'entraînement (2), dans lequel évidement un groupe de sortie (36) est enfiché depuis le côté supérieur de boîtier (6) et par un côté inférieur (57), lequel groupe de sortie dispose d'un corps de sortie (38) pouvant tourner autour d'un axe de rotation (45) orienté dans le sens de la hauteur de boîtier et d'un système de palier à roulement servant à supporter de manière rotative le corps de sortie (38) par rapport au boîtier d'entraînement (2), dans lequel le corps de sortie (38) présente une couronne dentée de sortie (48) se trouvant en prise par enclenchement à l'intérieur du boîtier d'entraînement (2) avec la denture d'entraînement (28) de l'au moins une unité d'entraînement (24a, 24b) et, dans la zone de son côté supérieur, à l'extérieur du boîtier d'entraînement (2), au moins une interface de fixation (42) servant à la prise de force, dans lequel le système de palier à roulement est constitué d'un palier à roulement (37) séparé par rapport au boîtier d'entraînement (2) et au corps de sortie (38), lequel palier à roulement comprend des composants de palier à roulement rassemblés en une unité modulaire présentant elle-même une cohésion, sous la forme d'une bague intérieure (63), d'une bague extérieure (64) entourant radialement côté extérieur la bague intérieure (63) et de corps de roulement (65) disposés entre la bague intérieure (63) et la bague extérieure (64), dans lequel le palier à roulement (37) est emboîté sur le corps de sortie (38) de manière coaxiale depuis le côté inférieur (23) tourné vers le boîtier d'entraînement (2) et prend appui au niveau d'une surface d'appui (74) pointant vers le bas du corps de sortie (38) par une surface frontale supérieure (63a), pointant vers le haut, de sa bague intérieure (63), et dans lequel la bague extérieure (64) prend appui à l'intérieur de l'évidement de boîtier (52), par une surface frontale inférieure (64a) tournée vers le boîtier d'entraînement (2), au niveau d'une surface d'appui (84) pointant vers le haut du boîtier d'entraînement (2), dans lequel la bague intérieure (63) du palier à roulement (37) est assemblée par serrage de manière axiale à la surface d'appui (74) du corps de sortie (38) par des premiers moyens de serrage (25) fixés au niveau du corps de sortie (38) et dans lequel la bague extérieure (64) du palier à roulement (37) est assemblée par serrage de manière axiale à la surface d'appui (84) du boîtier d'entraînement (2) par des deuxièmes moyens de serrage (26) fixés au niveau du boîtier d'entraînement (2), dans lequel les premiers moyens de serrage (25) présentent une première bague de serrage (75) fixée au niveau du corps de sortie (38), laquelle est assemblée par serrage au corps de sortie (38) au moyen de vis de fixation (77), vissées depuis le bas dans le corps de sortie (38), des premiers moyens de serrage (25) et repose par sa surface frontale (76) supérieure au niveau de la surface frontale inférieure (63b) de la bague intérieure (63), dans lequel la bague intérieure (63) est disposée de manière axiale entre la surface d'appui (74) pointant vers le bas du corps de sortie (38) et la première bague de serrage (75), et dans lequel les deuxièmes moyens de serrage (26) présentent une deuxième bague de serrage (86) fixée au niveau du boîtier d'entraînement (2), laquelle repose par sa surface frontale (87) inférieure au niveau de la surface frontale supérieure (64b) de la bague extérieure (64), dans lequel la bague extérieure (64) est disposée de manière axiale entre la surface d'appui (84) pointant vers le haut du boîtier d'entraînement (2) et la deuxième bague de serrage (86), **caractérisé en ce que** la deuxième bague de serrage (86) est fixée au niveau du boîtier d'entraînement (2) au moyen de vis de fixation (93), vissées depuis le haut dans le boîtier d'entraînement (2), des deuxièmes moyens de serrage (26), qu'une distance (A) axiale se trouve entre la première bague de serrage (75) et le corps de sortie (38) de sorte qu'une précontrainte axiale de la bague intérieure (63) par rapport au corps de sortie (38) soit présente, et qu'une distance (B) se trouve entre la deuxième bague de serrage (86) et le boîtier d'entraînement (2) dans le sens de la hauteur du boîtier d'entraînement (2) de sorte qu'une précontrainte axiale de la bague extérieure (64) par rapport au boîtier d'entraînement (2) soit présente.

2. Dispositif d'entraînement en rotation actionné par un fluide selon la revendication 1, **caractérisé en ce que** les premiers moyens de serrage (25) coopèrent avec la bague intérieure (63) sans traverser la bague intérieure (63), et/ou que les deuxièmes moyens de serrage (26) coopèrent avec la bague extérieure (64) sans traverser la bague extérieure (64).

3. Dispositif d'entraînement en rotation actionné par un fluide selon la revendication 1 ou 2, **caractérisé en ce que** les premiers moyens de serrage (25) soumettent à une contrainte la surface frontale inférieure (63b), opposée à la surface frontale supérieure (63a), de la bague intérieure (63), dans lequel ils s'engagent, du côté de la bague intérieure (63), exclusivement au niveau de la surface frontale inférieure (63b) de cette dernière.

4. Dispositif d'entraînement en rotation actionné par un fluide selon l'une quelconque des revendications 1 à 3, **caractérisé en ce que** les deuxièmes moyens de serrage (26) soumettent à une contrainte la surface frontale supérieure (64b), opposée à la surface frontale inférieure (64a), de la bague extérieure (64), dans lequel ils s'engagent, du côté de la bague extérieure (64), exclusivement au niveau de la surface frontale supérieure (64b) de cette dernière.

5. Dispositif d'entraînement en rotation actionné par un fluide selon l'une quelconque des revendications 1 à 4, **caractérisé en ce que** les deuxièmes moyens de serrage (26) sont disposés dans le boîtier d'entraînement (2) de manière totalement enfoncée depuis le haut dans le sens de la hauteur du boîtier d'entraînement (2).

6. Dispositif d'entraînement en rotation actionné par un fluide selon l'une quelconque des revendications 1 à 5, **caractérisé en ce que** la première et/ou la deuxième bague de serrage (75, 86) sont réalisées de manière plate en forme de disque et/ou sont constituées d'une tôle d'acier.

7. Dispositif d'entraînement en rotation actionné par un fluide selon l'une quelconque des revendications 1 à 6, **caractérisé en ce qu'**à la fois la bague intérieure (63) et la bague extérieure (64) du palier à roulement (37) sont un corps annulaire sans interruption, et/ou que le palier à roulement (37) est un roulement à billes et en particulier un roulement à billes à gorges profondes.

8. Dispositif d'entraînement en rotation actionné par un fluide selon l'une quelconque des revendications 1 à 7, **caractérisé en ce que** deux espaces longitudinaux séparés l'un de l'autre par une paroi intermédiaire (17) sont disposés l'un à côté de l'autre avec des axes longitudinaux (16a, 16b) parallèles les uns par rapport aux autres et perpendiculaires par rapport à l'axe de rotation (45) du corps de sortie (38) dans le boîtier d'entraînement (2), dont au moins un forme un espace d'entraînement (15a, 15b), dans lequel est disposée une unité d'entraînement (24a, 24b) pouvant être coulissée de manière linéaire par une contrainte exercée de manière commandée par un fluide, laquelle unité d'entraînement présente, au niveau de son côté longitudinal tourné vers la paroi intermédiaire (17), une denture d'entraînement (28), dans lequel de manière appropriée chacun des deux espaces longitudinaux forme un espace d'entraînement (15a, 15b), dans lequel est disposée une unité d'entraînement (24a, 24b) pouvant être coulissée de manière linéaire par une contrainte exercée de manière commandée par un fluide, laquelle unité d'entraînement présente, au niveau de son côté longitudinal tourné vers la paroi intermédiaire (17), une denture d'entraînement (28), dans lequel les deux unités d'entraînement (24a, 24b) sont en prise par enclenchement avec la couronne dentée de sortie (48) du corps de sortie (38).
